# EUROPEAN PATENT APPLICATION

(11) **EP 2 846 565 A1**
(43) Date of publication of application: **11.03.2015**
(21) Application number: 13785291.9
(22) Date of filing: 24.04.2013
(51) Int. Cl.: H04W 4/16, G06Q 50/10, G06Q 50/30

(54) **ADDITIONAL SERVICE EXECUTING APPARATUS INCLUDED IN USER TERMINAL TO PROVIDE ADDITIONAL SERVICE, AND METHOD FOR PROVIDING ADDITIONAL SERVICE USING SAME**

(30) Priority: 03.05.2012 KR 20120047180; 29.11.2012 KR 20120137099
(71) Applicant: TI Square Technology Ltd., 126-1 Pyeongchon-dong, Dongan-gu Anyang-si, Gyeonggi-do 431-070 (KR)
(72) Inventor: LEE, Gil-soo, Anyang-si Gyeonggi-do 431-070 (KR); CHOI, Do-yeon, Yongin-si Gyeonggi-do 446-908 (KR); HONG, Seung-chun, Anyang-si Gyeonggi-do 430-853 (KR)
(74) Representative: Taor, Simon Edward William
(86) International application number: PCT/KR2013/003537
(87) International publication number: WO 2013/165119

(57) **Abstract**

The present invention relates to an additional service executing apparatus included in a user terminal to provide an additional service, and to a method for providing an additional service using the apparatus. Provided is an additional service executing apparatus having a display unit, included in a user terminal to provide an additional service, the apparatus comprising: an additional service menu interface providing unit which is driven by a signal generated upon the detection of a preset event, and which outputs an additional service menu interface corresponding to the detected event on the display unit; and an additional service execution unit for providing an additional service by performing an operation corresponding to the additional service menu selected through the additional service menu interface by a user. Also provided is a method for providing an additional service using the apparatus.

## Description

### Technical Field

The present invention relates, in general, to an additional service execution apparatus included in a user terminal to provide an additional service and a method for providing an additional service using the apparatus and, more particularly, to an additional service execution apparatus and a method for providing an additional service using the apparatus, which can provide various types of additional services through a user terminal depending on events occurring on the user terminal.

### Background Art

Recently, with the rapid popularization of so-called smart phones, a conventional mobile communication service environment merely based on simple calls has changed to a data communication service-centered environment, and various types of communication services based on data communication have been proposed. In particular, such an environment has changed to an environment in which a web page is viewed over the Internet or in which an application program (application) is installed and a user can be provided with desired services using a mobile communication terminal, that is, a smart phone, from anywhere.

However, such an environment is not greatly differentiated from a conventional scheme in relation to a call service that is the principal function of a mobile communication terminal. That is, an existing call service in which a user enters a phone number or selects a contact number from a phone book, makes a call to the contact number, and has a telephone conversation if a called terminal receives the call is not different from the conventional scheme in the aspect of a basic scheme and the user's interface environment.

In this regard, there is required the development of a method for enabling various types of additional services to be provided via the display unit of a mobile communication terminal, as a procedure separate from the execution of a call service in respective states when a user is provided with a call service, that is, before a call is connected, while a call is being connected, and after a call has been terminated.

Referring to Korean Patent Application Publication No. 10-2005-0075830 (Date of Publication: July 22, 2005), a system and method for providing multimedia content using a wireless mobile communication network are disclosed. This technology provides predetermined multimedia content to a calling party and/or a called party for a waiting time ranging from call origination to call connection, but has limitations in that it is determined whether a user has subscribed to the service via a mobile switching center and a content provision service server in a procedure for processing a call passing through a mobile communication network, and content is transmitted over a mobile communication network if it is determined that the user has subscribed to the service. That is, the prior art is problematic in that a network load is increased because the mobile communication network must be passed, and in that a call processing procedure is complicated, and the types and contents of service that can be provided must be defined on the premise of the mobile communication network.

Further, various types of events may also occur on a user terminal such as a tablet PC or a computer other than a mobile communication terminal, and there is a need to allow the user terminal to be separately provided with various types of additional services while an operation corresponding to an occurring event is performed when an event occurs.

### Disclosure

### Technical Problem

Accordingly, the present invention has been made keeping in mind the above problems, and an object of the present invention is to provide an apparatus and method that can provide various types of additional services through a user terminal while performing an operation corresponding to an occurring event when an event occurs on the user terminal.

Another object of the present invention is to provide a method and apparatus that allow a user terminal to be provided with various types of additional services, independent of event execution, while a procedure for executing an event which is preset by the operating system or the manufacturing company of the user terminal is performed.

A further object of the present invention is to provide a method and apparatus that can configure an additional service menu customized for each user over a network and can provide an additional service menu interface specialized for each user based on the configured additional service menu.

Yet another object of the present invention is to provide a method and apparatus that can simultaneously provide an event interface corresponding to an event occurring on the user terminal and an additional service menu interface required to provide additional services.

Still another object of the present invention is to provide a method and apparatus that can independently execute additional services in the form of an application program separately from the manufacturing company or the operating system of the user terminal.

### Technical Solution

The present invention to accomplish the above objects provides an additional service execution apparatus, the apparatus being included in a user terminal having a display unit to provide an additional service, including an additional service menu interface provision unit operated in response to a driving signal generated upon detecting a preset event, and configured to provide an additional service menu interface corresponding to a detected event to the display unit; and an additional service execution unit for performing an operation corresponding to an additional service menu selected by a user through the additional service menu interface, thus providing an additional service.

In this case, the additional service menu interface provision unit may configure an additional service menu interface using pre-stored additional service menu information, and provide the additional service menu information to the display unit.

Further, the additional service menu interface provision unit may access an additional service management server to request additional service menu information, configure an additional service menu interface based on additional service menu information received from the additional service management server, and provide the additional service menu interface to the display unit.

Furthermore, the additional service menu interface provision unit may superimpose the additional service menu interface on an event interface provided to the display unit to provide a service corresponding to the detected event.

Furthermore, the additional service menu interface may be superimposed on the event interface so that the additional service menu interface is arranged in a partial area of the display unit.

Furthermore, in the additional service menu interface provision unit, the preset event may be a call service event.

Furthermore, in the additional service menu interface provision unit, the preset event may be a driving event input from the user.

Furthermore, in the additional service menu interface provision unit, the preset event may be a sensor event generated from a sensor provided in the user terminal.

Furthermore, the additional service menu interface may include a unique service menu that is executable by the additional service execution unit itself, a local service menu that is executable in the user terminal, and a network service menu that is executable via an external additional service server connected through a network.

Furthermore, the additional service execution unit of the user terminal may access an additional service server and then establish a data path for transmission/reception of data to/from the additional service server.

Furthermore, the additional service execution unit may transmit/receive data to/from another user terminal, which accesses the additional service server and then establishes a data path, through the data path, thus executing an additional service.

In accordance with another aspect of the present invention, there is provided a method for providing an additional service, the method providing an additional service using an additional service execution apparatus included in a user terminal having a display unit to provide an additional service, including a first step of being operated in response to a driving signal generated upon detecting a preset event, and providing an additional service menu interface corresponding to the detected event to the display unit; and a second step of performing an operation corresponding to an additional service menu selected by a user through the additional service menu interface, thus providing the additional service.

### Advantageous Effects

According to the present invention, there can be provided an apparatus and method that can provide various types of additional services through a user terminal while performing an operation corresponding to an occurring event when an event occurs on the user terminal.

Further, the present invention allows a user terminal to be provided with various types of additional services, independent of event execution, while a procedure for executing an event which is preset by the operating system or the manufacturing company of the user terminal is performed.

Furthermore, the present invention can provide a method and apparatus that can configure an additional service menu customized for each user over a network and can provide an additional service menu interface specialized for each user based on the configured additional service menu.

Furthermore, the present invention can simultaneously provide an event interface corresponding to an event occurring on the user terminal and an additional service menu interface required to provide additional services.

Furthermore, the present invention is advantageous in that there can be provided a method and apparatus that can independently execute additional services in the form of an application program separately from the manufacturing company or the operating system of the user terminal.

### Description of Drawings

Fig. 1 is a diagram showing a user terminal including an additional service execution apparatus according to the present invention and an additional service management server and an additional service server connected to the user terminal;
Fig. 2 is a diagram showing an embodiment of the configuration of an additional service execution apparatus 400 included in a user terminal 100;
Fig. 3 is a diagram of a screen illustrating a state in which an additional service menu interface provision unit 410 is operated and an additional service menu interface is provided to a display unit, wherein the screen is a screen when the user terminal 100 is a calling terminal on which a call connection request event occurs;
Fig. 4 is a diagram of a screen illustrating a case where a data path is established between user terminals 100, that is, a calling terminal and a called terminal which are executing a call service, via an additional service server 300, and an additional service is executed by transmitting or receiving data through the data path;
Fig. 5 is a flowchart showing an embodiment of a method in which the additional service execution apparatus 400 included in the user terminal 100 having a display unit, as described with reference to Figs. 1 to 4, to provide an addition service, provides the additional service;
Fig. 6 is a diagram showing an embodiment of a procedure in which a data path is established between terminals 10 and 20 via the additional service server 300;
Fig. 7 is a diagram showing an example of a case where the configuration of the additional service execution apparatus 400 included in the user terminal 100 or 300 to perform the present invention is implemented by an application program (application); and
Fig. 8 is a diagram showing an example of the internal configuration of an application program management unit 52.

### Best Mode

Hereinafter, embodiments of the present invention will be described in detail with reference to the attached drawings.

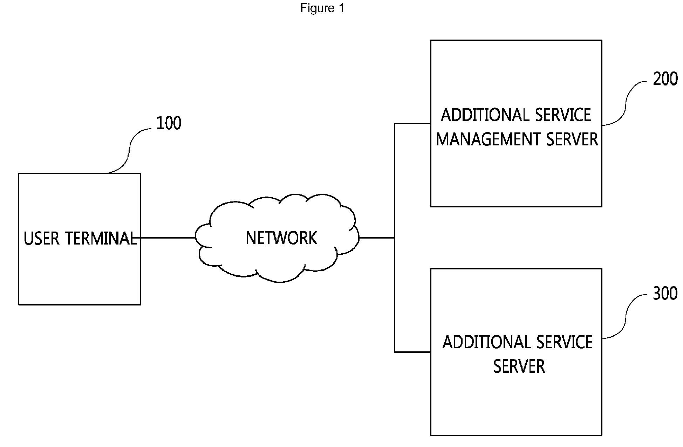

Fig. 1 is a diagram showing a user terminal including an additional service execution apparatus according to the present invention and an additional service management server and an additional service server connected to the user terminal.

Referring to Fig. 1, a user terminal 100 is connected to an additional service management server 200 and an additional service server 300 through a network.

Here, the network is a concept including well-known wired/wireless Internet or a mobile communication network or a combination thereof, and denotes a data packet network for performing only data transmission/reception as a concept contrasted with a communication network for performing call services in the present invention. The user terminal 100 may be a mobile communication terminal, a computer, a tablet PC or the like, which is provided with a network access means.

When the user terminal 100 is a communication terminal, the user terminal 100 may be provided with a communication service through a communication network. Although not shown in the drawing, the communication network denotes a conventional network for performing a communication service by at least one or a combination of a Public Switched Telephone Network (PSTN), a mobile communication network, and the Internet, and an actual communication network includes communication network resources such as a mobile switching center and a Home Location Register (HLR). When the user terminal 100 is a communication terminal, the user terminal is provided with a call service such as that well known in the prior art through the communication network.

In the present invention, the user terminal 100 may preferably be a so-called "smart phone" on which an application program (application) may be installed and executed and which is provided with an Internet access means. The user terminal 100 may include a display unit (not shown) which executes a touch screen-type input and output function. Further, the user terminal 100 includes therein an Operating System (OS) for managing the overall operation of the user terminal 100.

Such a user terminal 100 is characterized by the following points in the present invention. That is, the user terminal 100 is chiefly characterized by including an additional service execution apparatus 400 which is operated in response to a driving signal generated when a preset event is detected and which provides an additional service by providing an additional service menu interface corresponding to the detected event to the display unit and performing an operation corresponding to an additional service menu selected by the user through the provided additional service menu interface.

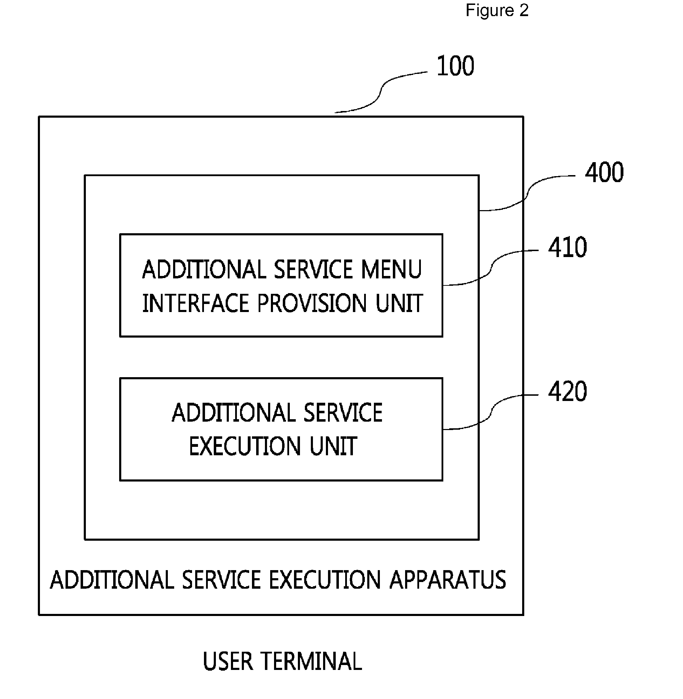

Below, the user terminal 100 including the additional service execution apparatus 400 will be described in detail with reference to Fig. 2.

Fig. 2 is a diagram showing an embodiment of the configuration of the additional service execution apparatus 400 included in the user terminal 100.

The additional service execution apparatus 400 of Fig. 2 is included in the user terminal 100 in such a way as to be included as a part of the Operating System (OS) of the user terminal 100 or to be installed in the form of an application program (application). Further, the additional service execution apparatus may be implemented as hardware in the user terminal 100.

In Fig. 2, it should be noted that, as the component of the user terminal 100 related to the present invention, only the additional service execution apparatus 400 is shown, and other typical components of the user terminal 100 are omitted.

Referring to Fig. 2, the additional service execution apparatus 400 includes an additional service menu interface provision unit 410 and an additional service execution unit 420.

The additional service menu interface provision unit 410 is operated in response to a driving signal generated upon detecting a preset event, and performs a function of providing an additional service menu interface corresponding to the detected event via a display unit (not shown).

Here, the preset event may be, for example, a call service event. The call service event denotes an event such as a call connection request event indicating a state in which a call connection request is made to a called terminal when the user terminal 100 is a calling terminal which requests a call connection, a call-connecting event indicating a state in which a call to the called terminal is being connected, and a call termination event indicating a state in which the call to the called terminal is terminated, and refers to events related to a call service. When the user terminal 100 is a called terminal for receiving a call connection request signal, the call service event may include events, such as a call response request event indicating a state in which a request for call connection is received from a calling terminal (a state in which a call connection request signal is received), a call-connecting event indicating a state in which a call connection to the calling terminal is being made, and a call termination event indicating a state in which the call to the calling terminal is terminated. Such a call service event may be detected by an event detection unit included in the operating system (OS) installed in the user terminal 100.

Further, the preset event may be a driving event input from the user. That is, when the user manipulates an input means implemented as, for example, a touch screen, and enters a command for operating the additional service execution apparatus 300, such a command may be detected as an event to operate the additional service menu interface provision unit 410 of the additional service execution apparatus 400.

Further, the preset event may be a sensor event generated from a sensor provided in the user terminal 100. As well-known in the art, the user terminal 100 may include therein various types of sensors, such as a Global Positioning System (GPS) sensor, a motion sensor, an infrared sensor, a thermal sensor, and a battery sensor, or application programs functioning as those sensors. The input of such a sensor is set to an event, and then the additional service menu interface provision unit 410 is operated. For example, when the user terminal 100 is located in a specific area, an event may be generated using the GPS sensor. Further, if the current capacity of a battery is reduced to a predetermined capacity or less, an event may be generated by a sensor for checking the residual capacity of the battery. Furthermore, when the user performs a specific operation (for example, an operation of overturning the terminal, or the like) using the user terminal, an event may be generated using the motion sensor of the user terminal 100.

In addition to such events, it is apparent that settings may be performed such that, when various events occur due to the operating system or hardware configuration within the user terminal 100, those events are detected and then the additional service menu interface provision unit 410 is operated.

In this way, the additional service menu interface provision unit 410 is operated in response to a driving signal generated upon detecting a preset event, and then provides an additional service menu interface corresponding to the detected event to the display unit. Here, the additional service menu interface, which is an interface including additional service menus that can be provided to the user through the user terminal 100, includes a function allowing the user to select menus.

The additional service menus may include a unique service menu that is executable by the additional service execution unit 420 itself, which will be described later, a local service menu that is executable in the user terminal 100, and a network service menu that is executable via an external additional service server 300 connected through the network.

The unique service menu, which is a menu for service that may be uniquely executed by the additional service execution unit 420, may be provided in the form of a library capable of being invoked, or in the form of a script.

The local service menu, which is a menu for service that may be executed by an operating system or a hardware component within the user terminal 100 in addition to the additional service execution unit 420, denotes a menu for a service such as the execution of a specific application program, for example, file copying or web browser driving.

The network service menu, which is a menu for a service that may be executed via the external additional service server 300 connected through the network, denotes a menu for a service that may be executed by the external additional service server 300, for example, link information enabling access to a specific website, such as link information for a change in a ringtone, a change in a ring-back tone, sound source downloading, or video viewing.

When the additional service menu interface provision unit 410 is operated, such an additional service menu interface may be configured based on additional service menu information pre-stored in the user terminal 100 and may be provided to the display unit. Alternatively, when the additional service menu interface provision unit 410 is operated, it may automatically access the additional service management server 200 to receive additional service menu information and may configure an additional service menu interface using the received menu information and provide the configured menu interface to the display unit.

Meanwhile, when the additional service menu interface is provided to the display unit, the additional service menu interface provision unit 410 may superimpose the additional service menu interface on an event interface provided to the display unit so as to provide the service corresponding to a detected preset event. For example, when the user terminal 100 is a calling terminal, and the detected event is a call connection request event, an event interface (a screen showing a state in which a call is being connected) corresponding to the call connection request event is displayed on the display unit, wherein the additional service menu interface may be superimposed on the event interface. In this case, the additional service menu interface may be partially arranged so that it is displayed only in a partial area of the display unit on which the event interface is displayed.

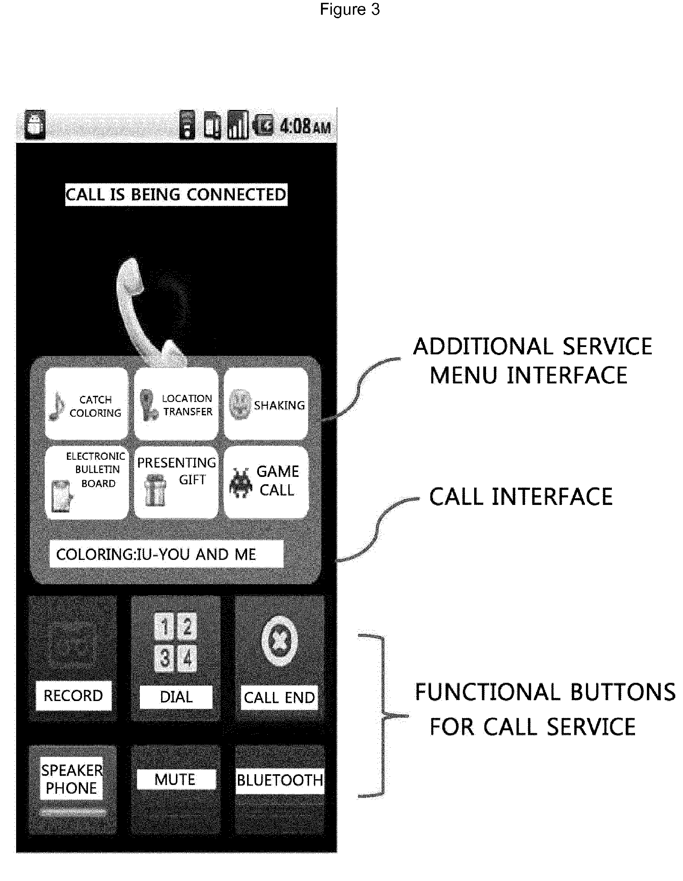

Fig. 3 is a diagram of a screen illustrating a state in which the additional service menu interface provision unit 410 is operated and an additional service menu interface is provided to the display unit, wherein the screen is a screen when the user terminal 100 is a calling terminal on which a call connection request event occurs.

Referring to Fig. 3, it can be seen that, by the operation of the additional service menu interface provision unit 410, an additional service menu interface is superimposed on a call interface (event interface) via the display unit. The call interface denotes an interface provided when a call connection request signal is generated in the user terminal 100. It can be seen in Fig. 3 that, since the occurring event is a call connection request event, functional buttons for a call service are provided together with the message "call is connecting." The additional service menu interface is superimposed on the call interface. Further, it can be seen that the additional service menu interface is arranged to only partially appear in a partial area of the display unit. Of course, if necessary, it is also possible to provide an additional service menu interface in accordance with the full screen of the display unit. In Fig. 3, the additional service menu interface is arranged and provided not to hide functional buttons for a call service provided to the call interface.

Meanwhile, the additional service menu interface denotes an interface provided in the form of a menu which allows the user to select an additional service. Such an additional service menu interface may be differently or identically configured depending on the detected call service event. When the user selects a specific additional service menu based on such an additional service menu interface, an operation corresponding to the selected additional service menu is performed.

Referring to Fig. 3, in the additional service menu interface, additional service menus such as "catch Coloring", "location transfer", "shaking", "electronic bulletin board", "presenting a gift", and "game call" are illustrated. When the user selects any one from among the additional service menus while a call is being connected, an operation corresponding to the selected additional service is performed by the additional service execution unit 420, which will be described later, while the call is being connected.

As described above, the additional service execution unit 420 functions to provide an additional service by performing an operation corresponding to the additional service menu selected by the user via the additional service menu interface in a state in which the additional service menu interface is provided to the display unit by the additional service menu interface provision unit 410.

For example, as shown in Fig. 3, when the user selects "electronic bulletin board" in the state in which the additional service menu interface is provided, a command is transferred to the operating system so that an operation for executing the "electronic bulletin board" service, that is, an application program for executing the electronic bulletin board service, is executed, thus enabling the corresponding additional service to be executed.

Meanwhile, the additional service execution unit 420 accesses the additional service server 300 to establish a data path for transmitting/receiving data to/from the additional service server 300 and to transmit/receive data through the data path, thus enabling the additional service to be executed. Further, the additional service execution unit 420 may also execute an additional service by transmitting/receiving data to/from another user terminal, which accesses the additional service server 300 to establish a data path, via the additional service server 300.

In this case, among the additional service menus provided by the additional service menu interface, an additional service, in which data is to be shared or is to be transmitted/received between the user terminals 100, may transmit/receive data through the data path established via the additional service server 300, and thus an additional service requiring transmission/reception of data may be executed while, for example, a call service, is being performed.

For example, as described above, when the user selects the "electronic bulletin board" service, the user terminal accesses the additional service server 300 to establish a data path, and a counterparty's terminal, which is engaged, also accesses the additional service server 300 to establish a data path, and thereafter the "electronic bulletin board" service is executed through the data paths, with the result that the electronic bulletin board service, such as by showing the same screen to the users of both terminals, may be provided.

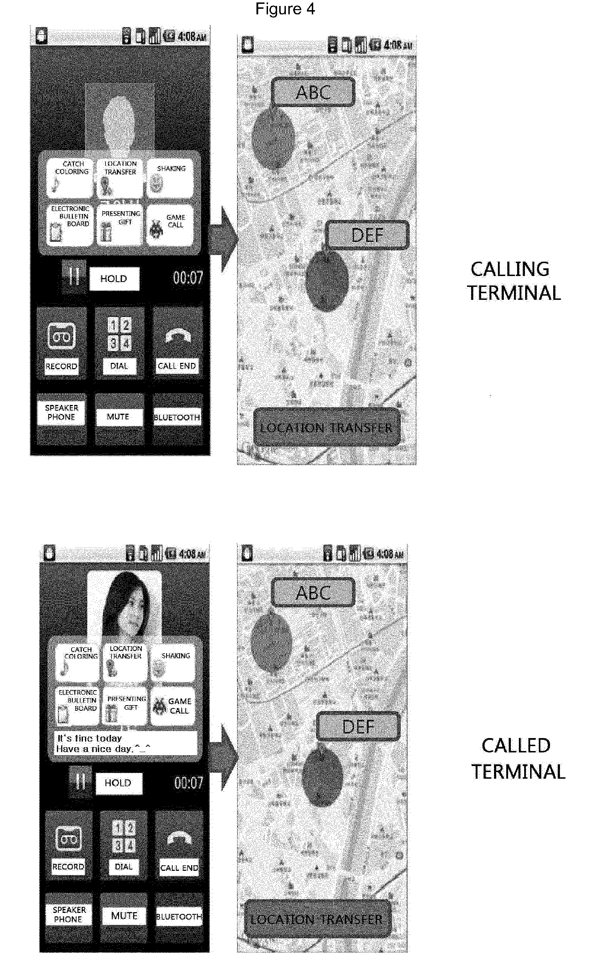

Fig. 4 is a diagram of a screen illustrating a case where a data path is established between user terminals 100, that is, a calling terminal and a called terminal which are executing a call service, via the additional service server 300, and an additional service is executed by transmitting or receiving data through the data path.

Referring to Fig. 4, it can be seen that a call service event is a call-connecting event, and additional service menu interfaces corresponding to the call-connecting event are respectively provided to the display units of the calling terminal and the called terminal which are user terminals 100. In such a state, when the users of the calling terminal and the called terminal select a "location transfer" service, each terminal accesses the additional service server 300 to establish a data path so as to execute the corresponding service, executes an application program corresponding to the "location transfer" service, displays a map on the screen, and shows the locations of the respective terminals on the map together. The location information of the terminals may be acquired using a well-known method based on the GPS information or wireless Local Area Network (WLAN) access information, and the acquired location information may be transmitted/received and shared between the terminals through the data path established via the additional service server 300. Therefore, each terminal may acquire not only the location information thereof, but also the location information of a counterpart, and may then simultaneously display the location information on the map screen. In Fig. 4, "ABC" denotes a calling terminal and "DEF" denotes a called terminal.

Meanwhile, the establishment of the data path via the additional service server 300 may also be performed when the user selects a related additional service menu, but may be configured such that, as the additional service menu interface provision unit 410 is operated, it automatically accesses the additional service server 300 to establish the data path in advance.

Referring back to Fig. 1, the additional service management server 200 and the additional service server 300 will be described.

As described above, the additional service management server 200 functions to store additional service menu information, and provide the additional service menu information to the user terminal 100 when a request for the additional service menu information is received from the user terminal 100. For this, the additional service management server 200 may respectively configure pieces of additional service menu information for respective user terminals 100. The additional service management server 200 may receive authentication information such as the phone number or identification (ID) of the corresponding user terminal 100 while receiving the request for additional service menu information from, for example, the user terminal 100, and may inquire about the pieces of additional service menu information for respective user terminals 100 based on the authentication information.

As described above, the additional service server 300 is a server for, when, of the additional service menu interface, a network service that is an external additional service is used, processing the network service, and may be, for example, a web server for providing web pages.

Further, as described above with reference to Fig. 4, when there is a need to establish a data path between user terminals 100, the additional service server 300 functions to establish a data path between the user terminals 100, thus allowing the user terminals 100 to transmit/receive data.

Although the additional service management server 200 and the additional service server 300 have been shown as separate components in Fig. 1, it is apparent that they may be implemented to be integrated into a single server.

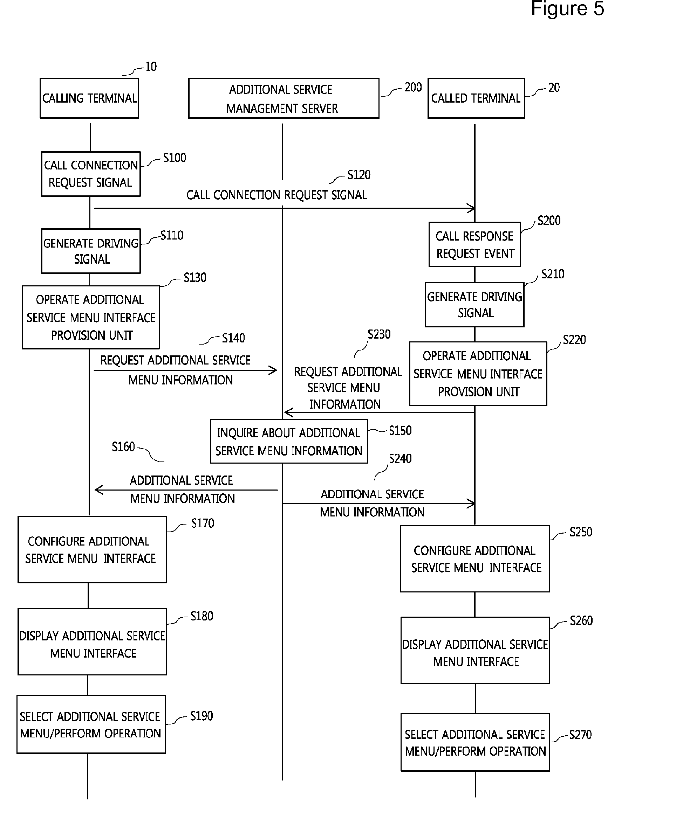

Fig. 5 is a flowchart showing an embodiment of a method in which the additional service execution apparatus 400 included in the user terminal 100 having a display unit, as described with reference to Figs. 1 to 4, to provide an addition service, provides the additional service, wherein when a call service event occurs and a call connection request signal is generated, the operations of additional service execution apparatuses 400 of the calling terminal 10 and the called terminal 20 which are the user terminals 100 and the operation of the additional service management server 200 are illustrated.

Referring to Fig. 5, when a call connection request signal is generated from the calling terminal 10 (S 100), a call connection request event occurs as a call service event related to a call service (S100). Owing to the event, a driving signal required to operate the additional service menu interface provision unit 410 of the additional service execution apparatus 400 is generated (S110). When the driving signal is generated, the additional service menu interface provision unit 410 of the calling terminal 10 is operated (S130).

Along with the operation, the calling terminal 10 sends a call connection request signal to the called terminal 20 through the mobile switching center or the like of a mobile communication network in response to the call connection request event (S120). In Fig. 5, since the mobile communication network, the mobile switching center constituting the mobile communication network, etc. are not directly related to the present invention, and are apparent by the conventional technology, it should be noted that a detailed description thereof is omitted here and the illustration thereof is omitted in Fig. 5.

Meanwhile, in the called terminal 20, as a call connection request signal is received, a call response request event occurs, and a driving signal required to operate the additional service menu interface provision unit 410 is generated (S200 and S210). As the driving signal is generated, the additional service menu interface provision unit 410 is operated even in the called terminal 20 (S220).

When the additional service menu interface provision units 410 are respectively operated in both the terminals 10 and 20, they access the additional service management server 200 and request additional service menu information from the server 200 (S140 and S230). The additional service management server 200 inquires about pieces of additional service menu information for respective terminals (S150), and transmits the pieces of additional service menu information to the terminals 10 and 20, respectively (S160 and S240).

Meanwhile, as described above, when the pieces of additional service menu information are pre-stored in the terminals 10 and 20, operations corresponding to the steps may be performed by the respective terminals 10 and 20. In this case, the configuration of the additional service management server 200 may be omitted.

When the pieces of additional service menu information are received from the additional service management server 200 or are inquired about in the terminals 10 and 20, the additional service menu interface provision units 410 of both the terminals 10 and 20 configure respective additional service menu interfaces based on the additional service menu information (S170 and S250), and display the configured additional service menu interfaces on the display units of the user terminals 100 in the same manner as above (S180 and S260).

When the additional service menu interfaces are displayed, and each user selects an additional service menu from the displayed additional service menu interface, the terminals 10 and 20 perform operations corresponding to the additional service menu (S190 and S270). As described above, the additional service menus included in the additional service menu interface may be a unique service, a local service, a network service, etc. When the user selects one from among the services, the additional service execution unit 420 allows each user terminal 100 to perform an operation corresponding to the selected service. For example, as shown in Fig. 4, when the user selects a "location transfer" service, the user terminal executes the corresponding application program, establishes a data path via the additional service server 300, as described above, and operates so that the location transfer service can be provided while transmitting/receiving data through the data path.

In Fig. 5, a case where the called terminal 20 responds to the call connection request signal after a call connection request signal has been sent to the called terminal 20 is not illustrated, but the called terminal 20 may respond to the call connection request signal at any step while performing the steps of Fig. 5. In this way, when the response to the call connection request signal is made, a call-connecting event occurs. In this case, when the additional service menu interface has already been provided, the provided additional service menu interface may continue to be provided, and an additional service menu interface corresponding to the call-connecting event may be reconfigured and provided.

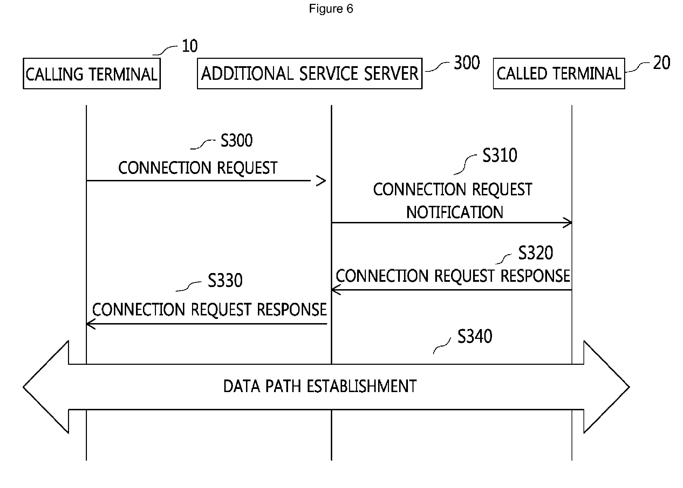

Fig. 6 is a diagram showing an embodiment of a procedure in which a data path is established between terminals 10 and 20 via the additional service server 300.

Fig. 6 is a diagram showing a procedure in which, when respective additional service menu interface provision units 410 are operated in the user terminals 100, that is, the user calling terminal 10 and the called terminal 20, and the additional service menu interfaces are provided to the display units of the respective terminals, if the calling terminal 10 selects, for example, a "location transfer" service, as shown in Fig. 4, a data path is established so as to execute the "location transfer" service.

Referring to Fig. 6, the calling terminal 10 sends a path connection request signal to the additional service server 300 (S300). In this case, since the "location transfer" service is selected, a path connection request signal is generated by an application program for performing the corresponding service. The path connection request signal may include the identifier, for example, phone number, of the called terminal 20.

When the path connection request signal is received, the additional service server 300 checks the called terminal 20 which is the counterpart of a connection, based on the identifier included in the path connection request signal, and sends a connection request notification signal, indicating that the connection request has been received from the calling terminal 10, to the called terminal 20 (S310).

The called terminal 20 sends a connection request response signal to the additional service server 300 in response to the connection request notification signal (S320), and the additional service server 300 sends a connection request response signal, indicating that the called terminal 20 has responded to the connection request, to the calling terminal 10 (S330).

Thereafter, the calling terminal 10 and the called terminal 20 respectively establish data paths to the additional service server 300 (S340), thus enabling data to be transmitted/received between both the terminals 10 and 20 through the data paths.

Meanwhile, although not explicitly shown in Fig. 6, the connection request signal at steps S300 and S310 may include identification information about an additional service. For example, when the "location transfer" service is selected by the calling terminal 10, the identification information of the additional service, required to notify the called terminal 20 that the corresponding service has been selected by the calling terminal 10, may be transmitted to the called terminal 20. The called terminal 20 executes an application program corresponding to the additional service, that is, the "location transfer" service, via the additional service execution unit 420 while receiving the connection request signal and sending a connection request response signal to the additional service server 300 based on the identification information of the additional service included in the connection request signal at step S320. If the application program corresponding to the "location transfer" service is executed on the called terminal 20, and the data path is established with the calling terminal 10 via the additional service server 300, as described above, the called terminal 20 may be provided with the same application program, that is, the "location transfer" service while sharing data with the calling terminal 10.

Meanwhile, it is apparent that the procedure for connecting the data paths between the terminals 10 and 20 and the additional service server 300, as described above with reference to Fig. 6, is merely exemplary, and that a detailed connection procedure may be implemented using another method. An important fact is that data paths are established between the calling terminal 10 and the called terminal 20 via the additional service server 300, and that data is transmitted/received through the data paths, thus enabling data to be shared between both the terminals 10 and 20 while the terminals use the same application program.

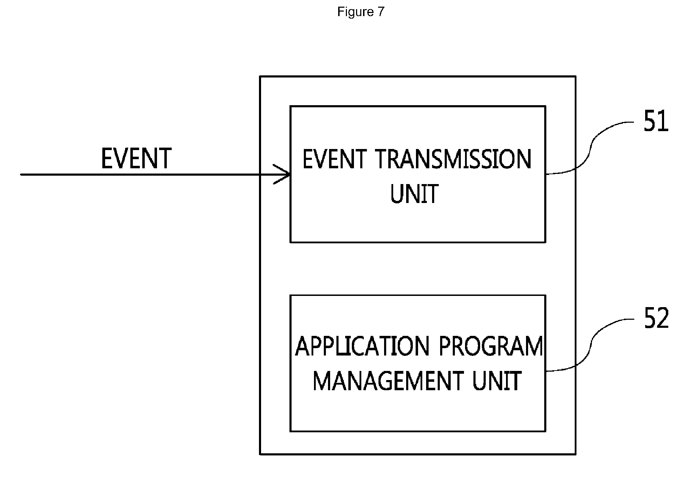

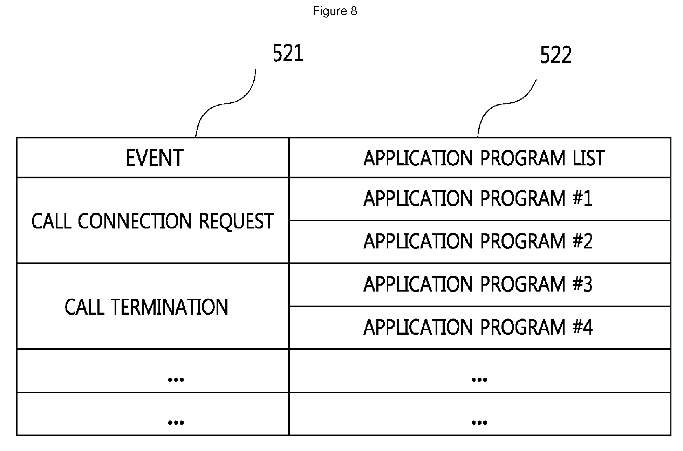

Next, a scheme for actually implementing the user terminal 100 including the additional service execution apparatus 400 according to the present invention will be described in detail with reference to Figs. 7 and 8.

First, the additional service execution apparatus 400 included in the user terminal 100, such as that shown in Fig. 2, to perform the present invention, may be implemented to be integrated into an Operating System (OS) included in the user terminal 100. As another method, the apparatus 400 may also be implemented to be installed in the user terminal 100 in the form of an application program (application) as an ex-post structure. In particular, since Android OS is open so that a terminal manufacturing company or an application program producer can process various types of events, such as a call service event, from the OS, such an OS is suitable in particular for the present invention. For example, when a call connection request event occurs on the Android OS, the event detection unit of the OS of the user terminal 100 may detect the event and then operate the additional service execution apparatus 400 implemented in the form of the application program.

Fig. 7 is a diagram showing an example of a case where the configuration of the additional service execution apparatus 400 included in the user terminal 100 or 300 to perform the present invention is implemented by an application program (application).

Referring to Fig. 7, the user terminal 100 includes an event transmission unit 51 and an application program management unit 52 within the OS. The configuration of Fig. 7 illustrates the actual configuration of the Android OS, which is similar in a basic principle to that of other OSs although terms used in other OSs may be different from that of the Android OS.

The event transmission unit 51 performs a function of receiving various types of events occurring on the hardware or the application program (application) of the user terminal 100, checking the application program, which is to be executed by reporting the occurrence of the received events to the application program, through the application program management unit 52, and notifying the checked application program that the events have occurred, thus executing the application program.

The application program management unit 52 pre-stores a list of application programs which will receive the corresponding events depending on the types of events. The list of the application programs is registered in the application program management unit 52 when the application programs are installed.

Fig. 8 is a diagram showing an example of the internal configuration of the application program management unit 52..

Referring to Fig. 8, the application program management unit 52 has an event type field 521 and a list 522 of application programs which will receive the corresponding events. In Fig. 8, as the types of events, a "call connection request" event and a "call termination" event are exemplarily illustrated. The "call connection request" event is an event for making a call, and may be caused by entering a phone number on a keypad, selecting a contact number from a phonebook, or requesting call origination on the application program. When such a "call connection request" event occurs, the event detection unit (not shown) of the OS of the user terminal 100 detects the event, and notifies the event transmission unit 51 of the occurrence of the event. The event transmission unit 51 checks a list of application programs set for the corresponding event from the list 522 of application programs such as that shown in Fig. 8, and executes the checked application program.

In Fig. 8, in the list of application programs registered for the "call connection request" event, two types, that is, application program #1 and application program #2, are registered. The application program management unit 52 notifies the event transmission unit 51 that application program #1 and application program #2 are registered for the "call connection request" event. The event transmission unit 51 sends a signal, indicating that the "call connection request" event has occurred, to the application program #1 and the application program #2.

Here, the event transmission unit 51 may use a scheme for, upon transmitting the event to application program #1 and #2 contained in the application program list, simultaneously notifying both the application programs of the occurrence of the event, or a scheme for first notifying only one of the application programs of the occurrence of the event and subsequently notifying the other application program of the occurrence of the event if the execution of the application program has been completed or stopped. This is possible by setting which type of scheme will be used to provide notification of the event in the application program management unit 52.

For example, in the case of the "call connection request" event, it is possible to first notify the application program #1 of the event, and subsequently notify the application program #2 of the event if the execution of the application program #1 is terminated. In this case, if a check request signal is received from the event transmission unit 51, the application program management unit 52 first provides notification of the information of the application program #1. If the information of the application program #1 has been received as a check response signal to the corresponding event from the application program management unit 52, the event transmission unit 51 transmits the event to the application program #1, and the application program #1 is loaded and executed on the OS as the event is received.

Meanwhile, in the case of the "call connection request" event, it is possible to notify both the application program #1 and the application program #2 of the occurrence of the event. In this case, if a check request signal has been received from the event transmission unit 51, the application program management unit 52 provides notification of the information of both the application program #1 and the application program #2. The event transmission unit 51 receives the information of the application programs #1 and #2, notifies both the application programs #1 and #2 of the occurrence of the event, and allows both the application programs #1 and #2 to be executed together.

The present invention described with reference to Figs. 1 to 6 may be implemented based on the principle described with reference to Figs. 7 and 8, wherein the additional service execution apparatus 400 including the additional service menu interface provision unit 410 and the additional service execution unit 420, such as that shown in Fig. 2, may be implemented in the form of a single application program.

For example, if a typical application program of the user terminal 100, which is executed to perform a call connection procedure when a call connection request event occurs, is designated as, for example, a call manager, only the call manager will be registered and executed as the application program #1 in the list of application programs to perform a call connection procedure when a call connection request event occurs, as shown in Figs. 7 and 8, in normal cases.

Meanwhile, while the additional service execution apparatus 400 is implemented in the form of an application program and is installed on the user terminal 100, it may be registered as the application program #2 in the application program list 522 of Fig. 8. Together with this, the sequence of execution of application programs contained in the application program list is set to simultaneous execution, as described above.

That is, in the case of the "call connection request" event, if the application program for implementing the additional service execution apparatus 400 according to the present invention is registered as the application program #2, and is designated to be executed simultaneously with the application program #1, the application program #1 and the application program #2 may be simultaneously executed when the corresponding event occurs.

In this way, if, as one of events, a call request signal (call connection request event) occurs, the event transmission unit 51 requests information of the application program set for the call connection request event from the application program management unit 52, and the application program management unit 52 notifies the event transmission unit 51 of information of both the application program #1 (existing call manager) registered for the corresponding event and the application program #2 in which the additional service execution apparatus 400 according to the present invention is implemented. The event transmission unit 51 simultaneously executes the application program #1 (call manager) and the application program #2 (the additional service execution apparatus 400 according to the present invention). Therefore, as described above with reference to Figs. 1 to 6, the application program for the additional service execution apparatus 400 including the configurations of the additional service menu interface provision unit 410 and the additional service execution unit 420 is executed as the application program #2, and thus the additional service execution apparatus 400 according to the present invention may be operated while the call service is performed on the user terminal 100, as described with reference to Figs. 1 to 6. Therefore, the additional service execution apparatus 400 according to the present invention may be operated while performing an operation corresponding to the occurring event.

Although the preferred embodiments of the present invention have been described, it should be appreciated that the present invention is not limited to the above embodiments and various changes and modifications are possible, without departing from the scope of the invention as disclosed in the present specification including the accompanying claims and drawings.

For example, a scheme for implementing the present invention using the application program, as described above with reference to Figs. 7 and 8, is exemplary, and it is apparent that various types of schemes may also be used depending on the type or the internal configuration of an operating system.

Further, although a case where the user terminal 100 is a smart phone which is a mobile communication terminal has been chiefly described as an example in the above embodiments, the present invention is not limited to such examples. For example, the user terminal may be applied to a terminal, which provides a function capable of installing an application program, as a wired telephone terminal other than a mobile communication terminal or as a terminal for providing a Mobile voice over Internet Protocol (mVoIP) service. Further, it is apparent that, even in the case of a wired terminal on which an application program cannot be installed, the present invention may be implemented to be integrated into an operating system in the terminal or may be implemented as separate hardware configuration.

## Claims

1. An additional service execution apparatus, the apparatus being included in a user terminal having a display unit to provide an additional service, comprising:
an additional service menu interface provision unit operated in response to a driving signal generated upon detecting a preset event, and configured to provide an additional service menu interface corresponding to a detected event to the display unit; and
an additional service execution unit for performing an operation corresponding to an additional service menu selected by a user through the additional service menu interface, thus providing an additional service.

2. The additional service execution apparatus of claim 1, wherein the additional service menu interface provision unit configures an additional service menu interface using pre-stored additional service menu information, and provides the additional service menu information to the display unit.

3. The additional service execution apparatus of claim 1, wherein the additional service menu interface provision unit accesses an additional service management server to request additional service menu information, configures an additional service menu interface based on additional service menu information received from the additional service management server, and provides the additional service menu interface to the display unit.

4. The additional service execution apparatus of claim 1, wherein the additional service menu interface provision unit superimposes the additional service menu interface on an event interface provided to the display unit to provide a service corresponding to the detected event.

5. The additional service execution apparatus of claim 4, wherein the additional service menu interface is superimposed on the event interface so that the additional service menu interface is arranged in a partial area of the display unit.

6. The additional service execution apparatus of claim 1, wherein in the additional service menu interface provision unit, the preset event is a call service event.

7. The additional service execution apparatus of claim 1, wherein in the additional service menu interface provision unit, the preset event is a driving event input from the user.

8. The additional service execution apparatus of claim 1, wherein in the additional service menu interface provision unit, the preset event is a sensor event generated from a sensor provided in the user terminal.

9. The additional service execution apparatus of claim 1, wherein the additional service menu interface includes a unique service menu that is executable by the additional service execution unit itself, a local service menu that is executable in the user terminal, and a network service menu that is executable via an external additional service server connected through a network.

10. The additional service execution apparatus of claim 1, wherein the additional service execution unit of the user terminal accesses an additional service server and then establishes a data path for transmission/reception of data to/from the additional service server.

11. The additional service execution apparatus of claim 10, wherein the additional service execution unit transmits/receives data to/from another user terminal, which accesses the additional service server and then establishes a data path, through the data path, thus executing an additional service.

12. A method for providing an additional service, the method providing an additional service using an additional service execution apparatus included in a user terminal having a display unit to provide an additional service, comprising:
a first step of being operated in response to a driving signal generated upon detecting a preset event, and providing an additional service menu interface corresponding to the detected event to the display unit; and
a second step of performing an operation corresponding to an additional service menu selected by a user through the additional service menu interface, thus providing the additional service.
